Europäisches Patentamt

European Patent Office

Office européen des brevets

(19)

(11) Publication number: **0 073 204**
**B1**

# EUROPEAN PATENT SPECIFICATION

(45) Date of publication of patent specification: **08.08.84**

(51) Int. Cl.³: **F 16 H 55/46, F 16 H 55/12**

(21) Application number: **82900409.2**

(22) Date of filing: **09.02.82**

(86) International application number:
**PCT/SE82/00035**

(87) International publication number:
**WO 82/03110 16.09.82 Gazette 82/22**

(54) **SPLIT PULLEY.**

(30) Priority: **10.03.81 SE 8101482**

(43) Date of publication of application:
**09.03.83 Bulletin 83/10**

(45) Publication of the grant of the patent:
**08.08.84 Bulletin 84/32**

(84) Designated Contracting States:
**BE CH DE FR GB LI NL**

(56) References cited:
**US - A - 3 005 356**
**US - A - 3 106 101**
**US - A - 4 031 769**
**US - A - 4 043 214**

(73) Proprietor: **AKTIEBOLAGET ELECTROLUX**
**Luxbacken 1**
**S-105 45 Stockholm (SE)**

(72) Inventor: **FRANCKE, Kurt Oskar**
**Taggsvampsvägen 139**
**S-141 46 Huddinge (SE)**
Inventor: **STRAND, Sten Torbjörn**
**Sälgstigen 25**
**S-149 00 Nynäshamn (SE)**

(74) Representative: **Hagelbäck, Evert Isidor et al,**
**c/o AB Electrolux Patentavdelningen**
**S-105 45 Stockholm (SE)**

Courier Press, Leamington Spa, England.

## Description

The present invention relates to a driving pulley arranged on an essentially cylindrical rotary shaft which is provided, at its ends, with journals for supporting the shaft.

In earlier known arrangements a pulley was formed as a separate unit which was placed on the shaft during assembly, and fixed there by riveting, screwing, or other suitable procedure. Alternatively the pulley consisted of two halves screwed to each other by bolts and in that manner were attached to the shaft. These pulleys were used mainly for transmitting larger forces.

One of these pulleys is shown in U.S. Patent No. 4,043,214. The driving pulley comprises two semi-circular segments which are attachable between flanges by bolts. Thus, in case of need, the segments can be replaced without removing the flanges from the shaft on which the whole unit is mounted in a non-rotatable manner.

A rotary power transmission device according to U.S. Patent No. 3,005,356 is bolted on a shaft having a non-circular polygonal cross section and secured by means of a bushing. Also here the primary object of the device is to make possible attaching a pulley or sprocket to a shaft the opposite ends of which are rendered inaccessible without removing the shaft from for example bearings. For this purpose the device comprises a pair of cooperating body sections which are adapted to encompass the shaft and means for surely locking said body sections together to provide a complete sprocket pulley or the like.

These devices have a complicated construction and are troublesome to assemble. Further, they demand close tolerances during manufacturing so that the shaft will not jam during assembly and thus be exposed to defective load or in extreme cases to become bent.

The purpose of the invention as claimed is to eliminate the above drawbacks and to provide a driving pulley wherein the shaft and the flanges of the pulley can be made in one piece and in which the following assembly work is simplified. The purpose has been achieved by the device according to the invention obtaining the characteristic features stipulated in the following claims.

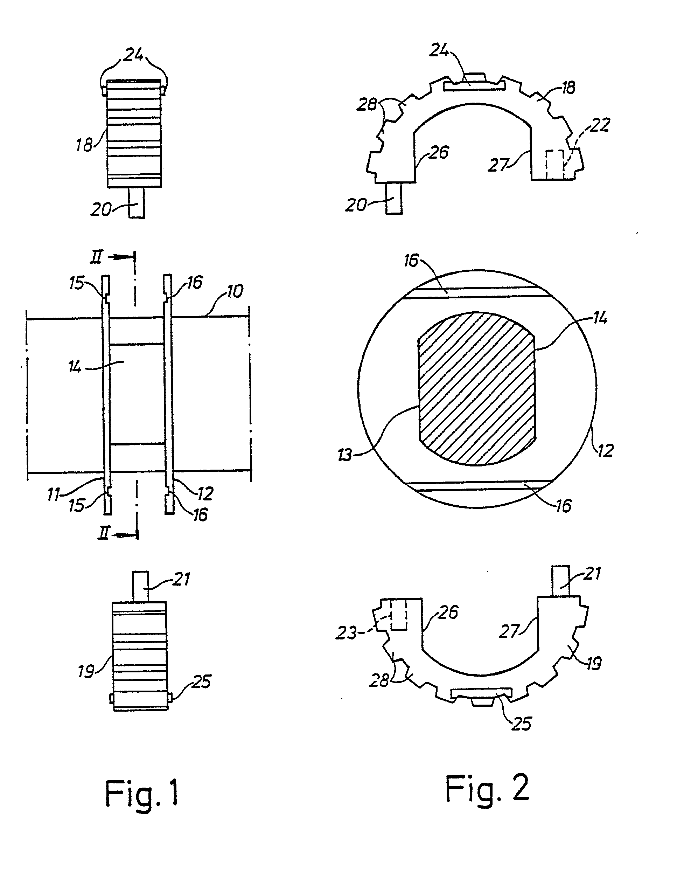

Further advantages of the invention will be obvious in the following description of an embodiment in connection with the accompanying drawing wherein Fig. 1 is a schematic bottom view of a portion of a shaft having the flanges of the driving pulley, Fig. 2 is a section along the line II—II in Fig. 1 which in addition shows both portions of the driving pulley before the assembly.

The shaft, as a whole designated by 10, has two radial flanges 11, 12. Outside the flanges the shaft in the embodiment is cylindrical but in the space between the flanges it has two diametrical opposed plane surfaces 13, 14 for providing a non-rotable connection between the driving pulley and the shaft. Naturally any other suitable profile would be fully conceivable, In the surfaces facing each other on the flanges 11, 12 notches 15, 16 are formed, said notches being essentially perpendicular in relation to the plane surfaces 13, 14.

The driving pulley 17 comprises two identical semi-circular portions 18, 19 each of them being separately placeable in the space between the flanges 11, 12. Each portion 18, 19 is at its one end provided with a location pin 20, 21 which during the assembly of the portions is intended to fit into a corresponding recess 22, 23 formed at the other end of the respective portion 18, 19.

On the side walls of the driving pulley 17 elevations 24, 25 are formed which during the assembly of the portions 18, 19 snap into notches 15, 16 and lock the portions 18, 19 in place between the flanges 11, 12. In addition each portion 18, 19 has on its inside two opposed plane surfaces 26, 27 the extension of which being half the length of the plane surfaces 13, 14 so that, when the portions 18, 19 have been placed between the flanges 11, 12 a non-rotatable connection is achieved between the driving pulley 17 and the shaft 10. A driving belt, not shown, grips into teeth 28 adapted in the periphery of the driving pulley 17 for transmission of power from a driving member, not shown. The shaft 10, the flanges 11, 12 and the notches 15, 16 can be moulded in one piece, for instance of plastics. In the same manner the portions 18, 19 of the driving pulley 17 together with the locating pins 20, 21 and the recesses 22, 23 are manufactured by the same procedure which decreases the manufacturing costs. By this arrangement, on one hand the assembly of the driving pulley is simplified, on the other hand, glueing, welding or other attaching of the driving pulley onto the shaft is superfluous.

The invention is not limited to the embodiment shown by several modifications are conceivable within the frame of the invention as characterized in the following claims.

## Claims

1. Driving pulley (17) mounted on an essentially cylindrical rotary shaft (10) having at its ends journals for supporting the shaft, means adapted on the shaft and the inside of the pulley for non-rotatable connection between both parts, the driving pulley (17) comprising two identical semi-circular portions (18, 19) attachable around the shaft (10) between two radial flanges (11, 12), characterized in that the radial flanges (11, 12) of the driving pulley (17) constitute a unit with the shaft (10) and are provided with snap action means (15, 16, 24, 25) for retaining the semi-circular portions (18, 19) when these are placed on the shaft (10).

2. Driving pulley according to Claim 1, characterized in that the snap action means consist of elevations (24, 25) formed on the side walls of the semi-circular portions (18, 19) which are intended to snap into notches (15, 16) shaped on the inside of the flanges (11, 12), when the driving pulley (17) is located around the shaft (10).

3. Driving pulley according to Claim 1, characterized in that each semi-circular portion (18, 19) of the driving pulley (17) has at its one end a locating pin (20, 21) intended to fit into a corresponding recess (22, 23) formed at the other end of the respective portion (18, 19).

4. Driving pulley according to Claim 1, characterized in that both the shaft (10) and the flanges (11, 12) are moulded in one piece for instance of plastics.

5. Driving pulley according to Claim 1, characterized in that the semi-circular portions (18, 19) of the driving pulley (17) are made of a plastic material.

**Patentansprüche**

1. Teilbare Antriebsrolle auf einer wenigstens angenähert zylindrischen Drehwelle (10), deren Enden in Lagern halternd geführt sind, mit Mitteln an der Welle und innenseitig der Antriebsrolle (17) zur unverdrehbaren Verbindung zwischen diesen beiden Teilsen, und welche Antriebsrolle (17) aus zweigleichen halbkreisförmigen Partien (18, 19) besteht, die um die Welle (10) herum zwischen zwei radialen Flanschen (11, 12) befestigbar sind, dadurch gekennzeichnet, dass die radialen Flansche (11, 12) der Antriebsrolle (17) einstückig mit der Welle (10) verbunden sind und mit Schnappmitteln (15, 16, 24, 25) zur Halterung der halbkreisförmigen Partien (18, 19) wenn die auf der Welle (10) plaziert sind.

2. Antriebsrolle nach Anspruch 1, dadurch gekennzeichnet, dass die Schnappmittel aus Erhebungen (24, 25) auf den Seitenwänden der halbkreisförmigen Partien (18, 19) bestehen, die zum Einschnappen in Aussparungen (15, 16) innenseitig der Flansche (11, 12) bestimmt sind, wenn die Antriebsrolle (17) auf der Welle (10) angeordnet ist.

3. Antriebsrolle nach Anspruch 1, dadurch gekennzeichnet, dass jede halbkreisförmige Partie (18, 19) der Antriebsrolle (17) an ihrem einen Ende einen Führungsstift (20, 21) aufweist, der zum Einsetzen in eine entsprechende Vertiefung (22, 23) an anderen Ende der jeweiligen Partie (18, 19) bestimmt ist.

4. Antriebsrolle nach Anspruch 1, dadurch gekennzeichnet, dass sowohl die Welle (10) als auch die Flansche (11, 12) einstückig beispielsweise aus Kunststoff geformt sind.

5. Antriebsrolle nach Anspruch 1, dadurch gekennzeichnet, dass die halbreisförmigen Partien (18, 19) derselben aus Kunststoff bestehen.

**Revendications**

1. Poulie d'entraînement (17) montée sur un arbre tournant sensiblement cylindrique (10), munie à ses extrèmités de tourillons afin de supporter l'arbre, comportant des moyens adaptès sur l'arbre et à l'intérieur de la poulie pour réaliser une liaison non rotative entre les deux parties, la poulie d'entraînement (17) comprenant deux parties semi-circulaires identiques (18, 19) pouvant être attachées autour de l'arbre (10) entre deux brides radiales (11, 12), caractérisée en ce que les brides radiales (11, 12) de la poulie d'entraînement (17) constituent une unité avec l'arbre (10) et sont pourvues de moyens réalisant une action de fermeture (15, 16; 24, 25) pour retenir les parties semi-circulaires (18, 19) lorsqu'elles sont placées su l'arbre (10).

2. Poulie l'entraînement suivant la revendication 1, caractérisée en ce que les moyens réalisant une action de fermeture consistent en des saillies (24, 25) formées sur les parois latérales des parties semi-circulaires (18, 19) qui doivent se fermer dans des entailles (15, 16) formées à l'intérieur des brides (11, 12), lorque la poulie (17) est située autour de l'arbre (10).

3. Poulie d'entraînement suivant la revendication 1, caractérisée en ce que chaque partie semi-circulaire (18, 19) de la poulie d'entraînement (17) est munie d'un ergot de positionnement (20, 21) qui doits s'insérer dans un évidement correspondant (22, 23) formé à l'autre extrémité de la partie respective (18. 19).

4. Poulie d'entraînement suivant la revendication 1, caractérisée en ce que l'arbre (10) ainsi que les brides (11, 12) sont moulés d'une seule pièce, par exemple en plastique.

5. Poulie d'entraînement suivant la revendication 1, caractérisée en ce que les parties semi-circulaires (18, 19) de la poulie d'entraînement (17) sont faites en un matériau plastique.

Fig. 1

Fig. 2